# EUROPEAN PATENT APPLICATION

(11) **EP 4 343 877 A1**
(43) Date of publication of application: **27.03.2024**
(21) Application number: 22935912.0
(22) Date of filing: 05.12.2022
(51) Int. Cl.: H01M 4/04, H01M 4/13, H01M 4/36, H01M 4/62, H01M 10/04, H01M 10/052, H01M 4/02

(54) **ANODE, MANUFACTURING METHOD THEREFOR, SECONDARY BATTERY COMPRISING SAME, AND SECONDARY BATTERY MANUFACTURING METHOD**

(30) Priority: 29.03.2022 KR 20220038662
(71) Applicant: LG Energy Solution, Ltd., Seoul 07335 (KR)
(72) Inventor: LEE, Hanyoung, Daejeon 34122 (KR)
(74) Representative: Plasseraud IP
(86) International application number: PCT/KR2022/019556
(87) International publication number: WO 2023/191240

(57) **Abstract**

The present invention relates to a negative electrode, a method of preparing the negative electrode, a secondary battery including the negative electrode, and a method of manufacturing the secondary battery. More particularly, the present invention relates to a negative electrode including a metal foil and a negative electrode active material layer coated on the metal foil, wherein the upper and lower portions of the negative electrode are coated with a binder; a method of preparing the negative electrode; a secondary battery including the negative electrode; and a method of manufacturing the secondary battery.

According to the present invention, the present invention has an effect of providing a negative electrode capable of preventing folding of a separator when manufacturing a stack cell due to excellent adhesion thereof to the separator without impairing battery performance, a method of preparing the negative electrode, a secondary battery capable of minimizing reduction in a manufacturing yield and occurrence of accidents due to low voltage defects, and a method of manufacturing the secondary battery.

## Description

### [Technical Field]

### [Cross-Reference to Related Application]

This application claims priority to Korean Patent Application No. 10-2022-0038662, filed on March 29, 2022, in the Korean Intellectual Property Office, the disclosure of which is incorporated herein by reference.

The present invention relates to a negative electrode, a method of preparing the negative electrode, a secondary battery including the negative electrode, and a method of manufacturing the secondary battery. More particularly, the present invention relates to a negative electrode capable of preventing folding of a separator when manufacturing a stack cell due to excellent adhesion thereof to the separator without impairing battery performance, a method of preparing the negative electrode, a secondary battery capable of minimizing manufacturing yield reduction and accidents due to low voltage defects as separator folding does not occur, and a method of manufacturing the secondary battery.

### [Background Art]

In general, a lithium secondary battery consists of a positive electrode prepared by coating a metal foil such as an aluminum foil with a positive electrode active material layer, a negative electrode prepared by coating a metal foil such as a copper foil with a negative electrode active material layer, a separator that prevents the positive and negative electrodes from mixing, and an electrolyte that allows lithium ions to move between the positive and negative electrodes.

The method of manufacturing a lithium secondary battery include a winding method and a stacking method, and the stacking method includes a stack and folding method (lamination & stacking method) and a Z folding method (zigzag stacking method).

In the case of the winding method, since a lithium secondary battery is formed by rolling cells, an empty space may be formed, and thus energy density may be low. In addition, when charging and discharging for a long time, distortion and swelling may occur.

On the other hand, in the case of the stacking method, since cells are stacked to form a lithium secondary battery, an empty space may be minimized, and thus energy density may be high and distortion and swelling may be reduced.

However, in the case of the stacking method, for example, an intermediate assembly such as a half-cell composed of a separator/negative electrode/separator/positive electrode or a mono cell composed of a separator/negative electrode/separator is manufactured, and then the intermediate assemblies are stacked and attached to form a stack cell. At this time, since the adhesive force between the negative electrode and the separator is low, the separator is folded inside the stack cell, which causes a low voltage defect in the lithium secondary battery and reduces a manufacturing yield. When the defect is not detected in the manufacturing process, accidents may occur during use by consumers.

Therefore, there is an urgent need to develop a secondary battery having high energy density, no distortion or swelling, and no low voltage defect due to non-folding of a separator.

### [Related Art Documents]

### [Patent Documents]

KR 10-2017-0103208 A (Publication date: September 13, 2017)

### [Disclosure]

### [Technical Problem]

Therefore, the present invention has been made in view of the above problems, and it is one object of the present invention to provide a negative electrode capable of preventing folding of a separator when manufacturing a stack cell due to excellent adhesion thereof to the separator without impairing battery performance and a method of preparing the same.

It is another object of the present invention to provide a secondary battery capable of minimizing reduction in a manufacturing yield and occurrence of accidents due to low voltage defects by folding of a separator and a method of manufacturing the same.

The above and other objects can be accomplished by the present invention described below.

### [Technical Solution]

I) In accordance with one aspect of the present invention, provided is a negative electrode including a metal foil and a negative electrode active material layer coated thereon, wherein upper and lower portions of the negative electrode are coated with a binder.
II) The binder may be preferably a PVdF-based binder.
III) In I) and II), the negative electrode active material layer may contain preferably an SBR-based binder.
IV) In I) to III), the lower portion of the negative electrode may preferably have a larger binder coating area than the upper portion thereof.
V) In I) to IV), the negative electrode active material layer may include preferably a silicon-based active material.
VI) In I) to V), the negative electrode active material layer may include preferably a carbon-based conductive material.
VII) In accordance with another aspect of the present invention, provided is a method of preparing a negative electrode, the method including forming a negative electrode active material layer on a metal foil; and performing pattern coating using a binder on upper and lower portions of the negative electrode active material layer.
VIII) In I) to VII), the pattern coating may be preferably dual die coating.
IX) In I) to VIII), the negative electrode active material layer may preferably be formed by a strip continuous coating method.
X) In I) to IX), the method of preparing a negative electrode may preferably include performing notching after performing pattern coating.
XI) In accordance with still another aspect of the present invention, provided is a secondary battery including a negative electrode including a metal foil and a negative electrode active material layer coated on the metal foil; a positive electrode including a metal foil and a positive electrode active material layer coated on the metal foil; and a separator, wherein upper and lower portions of the negative electrode are coated with a PVdF-based binder.
XII) In I) to XI), the separator may contains a PVdF-based binder.
XIII) In accordance with yet another aspect of the present invention, provided is a method of manufacturing a secondary battery, the method including forming a negative electrode active material layer on a metal foil; performing pattern coating using a binder on upper and lower portions of the negative electrode active material layer; preparing a mono cell by performing notching after the pattern coating; laminating a separator on the mono cell; and stacking, on the separator, a positive electrode including a metal foil and a positive electrode active material layer coated on the metal foil.
XIV) In I) to XIII), the pattern coating may preferably be dual die coating, or the negative electrode active material layer may be formed by a strip continuous coating method.

### [Advantageous Effects]

According to the present invention, the present invention has an effect of providing a negative electrode capable of preventing folding of a separator when manufacturing a stack cell due to excellent adhesion thereof to the separator without impairing battery performance and a method of preparing the same.

In addition, according to the present invention, the present invention has an effect of providing a secondary battery capable of minimizing a manufacturing yield reduction and accident occurrence due to low voltage defects, and a method manufacturing the same.

### [Description of Drawings]

FIG. 1 includes top views schematically shown by projecting, onto a horizontal plane, a negative electrode sheet obtained by sequentially coating a metal foil (Strip) with a negative electrode active material layer; a negative electrode sheet in which the upper and lower portions of the upper layer of the negative electrode active material layers are coated with a binder; and a negative electrode plate notched from the negative electrode sheet.
FIG. 2 is a process diagram briefly illustrating a stack cell assembly process from electrode preparation to taping (Taping).
FIG. 3 includes cross-sectional views briefly illustrating the cross-sections of intermediate assemblies in which separator folding occurs.

### [Best Mode]

The present inventors confirmed that, when the upper and lower portions of the upper layer of the negative electrode active material layers were thinly coated with a predetermined binder, folding of a binder was prevented without deterioration in battery performance, and thus productivity and safety of a lithium secondary battery were greatly improved. Based on these results, the present inventors conducted further studies to complete the present invention.

Hereinafter, a negative electrode, a method of preparing the negative electrode, a secondary battery including the negative electrode, and a method of manufacturing the secondary battery according to the present invention are separately described in detail.

The terms and words which are used in the present specification and the appended claims should not be construed as being confined to common meanings or dictionary meanings but should be construed as having meanings and concepts matching the technical spirit of the present invention in order to describe the present invention in the best fashion. In addition, since the configurations shown in the examples and drawings of this specification are only embodiments of the present invention, and do not represent all the technical spirit of the present invention, it should be understood that there are many equivalents and variations that may be substituted for the above configurations, and that the present invention may be arranged, substituted, combined, separated, or designed in various other configurations.

Unless otherwise defined, all technical and scientific terms used in this description have the same meaning as commonly understood by those of ordinary skill in the art to which the present invention pertains.

### Negative electrode

The negative electrode of the present invention is a negative electrode including a metal foil and a negative electrode active material layer coated on the metal foil, wherein the upper and lower portions of the negative electrode are coated with a binder. In this case, adhesion of the negative electrode to a separator may be improved without deterioration in battery performance, thereby preventing the separator from folding when manufacturing a stack cell.

The binder is preferably a PVdF-based binder. As a specific example, the PVdF-based binder may include one or more selected from the group consisting of poly(vinylidene fluoride-co-hexafluoropropylene) (PVdF-HFP), polyvinylidene fluoride-co-trichloroethylene (PVdF-TCE), poly(vinylidene fluoride-co-chlorotrifluoroethylene) (PVdF-CTFE), poly(vinylidene fluoride-co-tetrafluoroethylene) (PVdF-TFE), and poly(vinylidene fluoride-co-trifluoroethylene) (PVdF-TrFE). In this case, adhesion to a separator may be further improved without deterioration in battery performance, thereby preventing the separator from folding when manufacturing a stack cell. In particular, when the negative electrode active material layer contains an SBR-based binder, and the binder is a PVdF-based binder, Adhesion between the negative electrode and a separator containing a PVdF-based binder may be excellent, and thus folding of the separator may be prevented when manufacturing a stack cell.

The area of the upper portion of the negative electrode coated with the binder may be preferably 0.01 to 0.2 times, more preferably 0.01 to 0.1 times, still more preferably 0.015 to 0.05 times, still more preferably 0.02 to 0.04 times the total area of the negative electrode active material layer. In this case, adhesion to a separator may be further improved without deterioration in battery performance, thereby preventing the separator from folding when manufacturing a stack cell.

The area of the lower portion of the negative electrode coated with the binder may be preferably 0.01 to 0.3 times, more preferably 0.05 to 0.2 times, still more preferably 0.1 to 0.2 times, still more preferably 0.1 to 0.15 times the total area of the negative electrode active material layer. In this case, the negative electrode may be used to manufacture various stack cells having different notching lengths. In addition, adhesion to a separator is not reduced without deterioration in battery performance, thereby preventing the separator from folding when manufacturing a stack cell.

The area of the lower portion of the negative electrode coated with the binder is preferably not less than the area of the upper portion thereof. More preferably, the area of the lower portion of the negative electrode is larger than the area of the upper portion thereof. In this case, the negative electrode may be used to manufacture various stack cells having different notching lengths. In addition, adhesion to a separator may be further improved without deterioration in battery performance, thereby preventing the separator from folding when manufacturing a stack cell.

For example, the layer having the upper and lower portions pattern-coated with the binder (hereinafter referred to as "pattern coating layer") may have a thickness of 1 to 30 um, preferably 1 to 5 µm, more preferably 2 to 4 um. Within this range, adhesion to a separator may be further improved without deterioration in battery performance, thereby preventing the separator from folding when manufacturing a stack cell.

In the present disclosure, the thickness of the layer may be measured according to a layer thickness measuring method commonly used in the art to which the present invention pertains, without particular limitation.

The negative electrode active material layer may contain preferably an SBR-based binder. As a specific example, the SBR-based binder may include one or more selected from the group consisting of styrene-butadiene rubber and acrylated styrene-butadiene rubber. In this case, adhesion to a separator may be further improved without deterioration in battery performance, thereby preventing the separator from folding when manufacturing a stack cell.

The negative electrode active material layer preferably includes a silicon-based active material. As a specific example, the silicon-based active material may include one or more selected from the group consisting of Si, SiOₓ (0<x<2), and SiC. In this case, adhesion to a separator may be further improved, thereby preventing the separator from folding when manufacturing a stack cell. In addition, the discharge capacity of a secondary battery may be improved.

The negative electrode active material layer preferably includes a conductive material. Conductive materials commonly used in the art to which the present invention pertains may be used as the conductive material of the present invention without particular limitation. As a specific example, the conductive material may include one or more selected from the group consisting of graphite including natural graphite and artificial graphite; carbon black such as acetylene black, Ketjen black, channel black, furnace black, lamp black, and thermal black; conductive fiber such as carbon fiber and metal fiber; conductive tubes such as carbon nanotubes; fluorocarbon; conductive metal powder such as aluminum powder and nickel powder; conductive whiskers such as zinc oxide whiskers and potassium titanate whiskers; conductive metal oxides such as titanium oxide; and conductive organic compounds such as polyphenylene derivatives, preferably carbon-based conductive materials. In this case, adhesion to a separator may be further improved without deterioration in battery performance, thereby preventing the separator from folding when manufacturing a stack cell.

When necessary, the negative electrode active material layer may further include a thickener, a surfactant, and/or a solvent commonly used in the art to which the present invention pertains.

### Method of preparing negative electrode

A method of preparing a negative electrode according to the present invention includes a step of forming a negative electrode active material layer on a metal foil; and a step of performing pattern coating using a binder on the upper and lower portions of the negative electrode active material layer. In this case, adhesion of the negative electrode to a separator may be improved without deterioration in battery performance, thereby preventing the separator from folding when manufacturing a stack cell.

Preferably, the binder may be mixed with water or an organic solvent to obtain a slurry or solution, and the slurry or solution may be used for pattern coating. In this case, the coating process may be easily controlled, and the reproducibility of a pattern coating layer may be excellent.

Any organic solvent capable of making the binder into a slurry or solution may be used in the present invention without particular limitation. For example, organic solvents commonly mixed with binders in the art to which the present invention pertains may be used as the organic solvent of the present invention. As a specific example, the organic solvent may include one or more selected from the group consisting of dimethylformamide (DMF), dimethylacetamide (DMAc), tetrahydrofuran (THF), acetone, N-methyl pyrrolidone (NMP), and dimethyl sulfoxide (DMSO).

The pattern coating is preferably slot die coating, more preferably dual die coating. In this case, since a plurality of layers may be coated using one coating device, the coating process may be simplified, and the process cost may be reduced. Also, since the width of the slot may be arbitrarily adjusted, coating may be performed for various widths without replacing the entire coating device.

As a specific example, the dual die coating device includes a slot die and a shim fitted into the slot. In this case, when a coating solution passes through the slot and the surface of a substrate is coated with the coating solution, the shim blocks a portion of the slot, thereby adjusting the width or division of the coating layer.

The shim may be fitted in a desired position in the slot, one or more shims may be provided, and a shim of a desired length may be selected. In this case, a plurality of layers may be coated or various widths of a coating layer may be formed using one coating device. Accordingly, when a coating shape is changed, the coating device does not need to be replaced. In addition, the coating process may be simplified, and the coating cost may be reduced.

The area of the pattern-coated upper portion is preferably 0.01 to 0.2 times, more preferably 0.01 to 0.1 times, still more preferably 0.015 to 0.05 times, still more preferably 0.02 to 0.04 times the total area of the negative electrode active material layer. Within this range, even after the notching process, since the thickness of the binder and the height of the pattern-coated upper portion of the negative electrode match, adhesion to a separator may be further improved without deterioration in battery performance, thereby preventing the separator from folding when manufacturing a stack cell.

The area of the pattern-coated lower portion is preferably 0.01 to 0.3 times, more preferably 0.05 to 0.2 times, still more preferably 0.1 to 0.2 times, still more preferably 0.1 to 0.15 times the total area of the negative electrode active material layer. Within this range, the negative electrode may be used to manufacture various stack cells having different notching lengths. Even after the notching process, a binder layer is not damaged or lost, so adhesion to a separator may be maintained. Accordingly, folding of the separator may be prevented when manufacturing a stack cell.

When coating is performed so that a coating layer is formed in a '-'shape or horizontally based on the upper and lower ends of the negative electrode, the ratio of areas or widths may be interpreted as a ratio of heights crossing the upper end from the lower end.

For example, the foil may be a copper foil.

The method of preparing a negative electrode may preferably include a step of performing notching after performing pattern coating. In this case, adhesion to a separator may be further improved without deterioration in battery performance, thereby preventing the separator from folding when manufacturing a stack cell.

In the present disclosure, notching refers to a process of processing an electrode along a portion to be cut using a cutting device.

The method of forming a negative electrode active material layer may be a method of coating a metal foil with a negative electrode active material composition in a slurry state by strip continuous coating. In this case, adhesion to a separator may be further improved without deterioration in battery performance, thereby preventing the separator from folding when manufacturing a stack cell.

Hereinafter, specific embodiments will be described in detail with reference to the accompanying drawings.

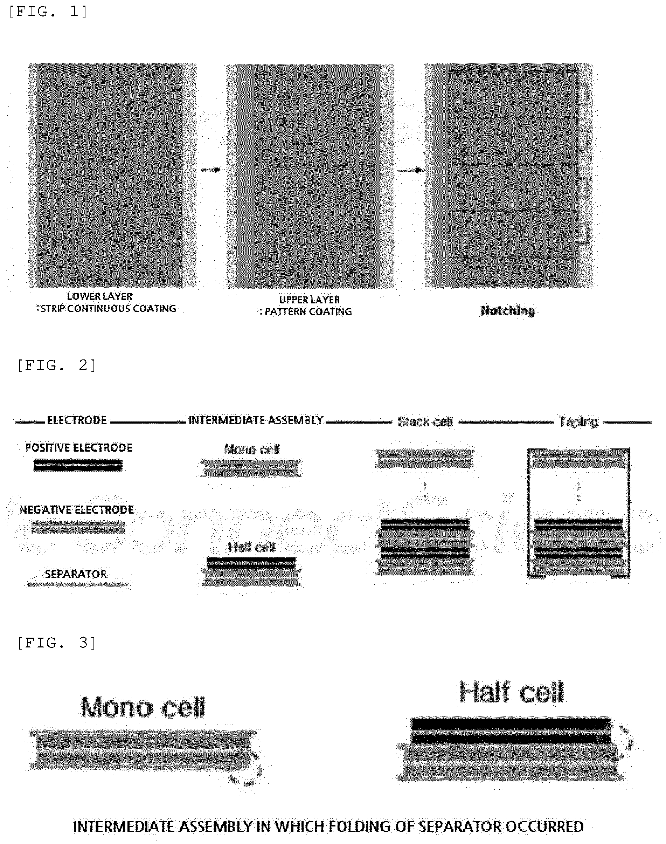

FIG. 1 below includes top views schematically shown by projecting, onto a horizontal plane, a negative electrode sheet obtained by sequentially coating a metal foil (Strip) with a negative electrode active material layer; a negative electrode sheet in which the upper and lower portions of the upper layer of the negative electrode active material layers are coated with a binder; and a negative electrode plate notched from the negative electrode sheet.

Referring to FIG. 1, first, a negative electrode sheet is prepared by coating a metal foil (outside portion; yellow area), which is a negative electrode current collector, with a negative electrode active material layer (inside portion; gray area) according to a continuous coating method. Then, the upper portion (narrow and light gray area) and the lower portion (wide and light gray area) of the upper layer of the negative electrode active material layer are pattern-coated with a predetermined binder. Here, the height of the pattern coating layer may be adjusted by the width of a dual-die shim. Next, the negative electrode sheet pattern-coated with the binder is notched to finally manufacture a negative electrode capable of preventing folding of a separator according to the present invention. In the drawing, four negative electrodes are configured. In a preferred embodiment, the negative electrode active material layer and/or the pattern coating layer may be dried immediately after formation and pressed without a separate drying process prior to notching to manufacture a negative electrode sheet. However, when a solvent having a high boiling point (bp) is used, a negative electrode sheet prepared before notching after forming the negative electrode active material layer and/or the pattern coating layer may be dried at a temperature equal to or higher than the boiling point of the solvent and then pressed.

### Secondary battery

A secondary battery of the present invention includes a negative electrode including a metal foil and a negative electrode active material layer coated on the metal foil; a positive electrode including a metal foil and a positive electrode active material layer coated on the metal foil; and a separator, wherein the upper and lower portions of the negative electrode are coated with a PVdF-based binder. In this case, a secondary battery having excellent battery performance and being capable of minimizing manufacturing yield reduction and accidents due to low voltage defects as separator folding does not occur may be provided.

Description of the negative electrode may include the description of the negative electrode and the method of preparing a negative electrode described above.

The positive electrode active material layer may preferably include a positive electrode active material, a binder, and a conductive material.

The positive electrode active material may include preferably one or more selected from the group consisting of lithium cobalt oxide such as LCO; lithium manganese oxide such as LiMnO₂ or LiMn₂O₄; a lithium iron phosphate compound such as LiFePO₄; lithium nickel cobalt aluminum oxide (NCA); lithium nickel oxide such as LiNiO₂; a nickel manganese-based lithium composite metal oxide prepared by replacing a part of nickel (Ni) with manganese (Mn) in the lithium nickel oxide; and an NCM-based lithium complex transition metal oxide prepared by replacing a part of nickel (Ni) with manganese (Mn) and cobalt (Co) in the lithium nickel oxide, more preferably a nickel manganese-based lithium composite metal oxide, an NCM-based lithium complex transition metal oxide, or a mixture thereof. In this case, reversible capacity and thermal stability may be excellent.

As another specific example, the positive electrode active material may be a compound represented by Chemical Formula 1 below:

[Chemical Formula 1] LiₐNiₓMn_{y}Co_{z}M_{w}O_{2+δ}

In Chemical Formula 1, M includes one or more selected from the group consisting of B, W, Al, Ti, and Mg, 1<a≤1.1, 0<x<0.95, 0<y<0.8, 0<z<1.0, 0≤w≤0.1, -0.02≤δ≤0.02, and x+y+z+w=1.

The positive electrode active material may be preferably a high-nickel positive electrode active material having a Ni content of 65 mol% or more based on the total weight of metal elements thereof.

For example, the conductive material may be selected according to need among the above-described conductive materials. Preferably, the conductive material may be a carbon-based conductive material, more preferably carbon black, graphite, or a mixture thereof.

For example, the binder may be a polymer binder, preferably the above-described PVdF-based binder, SBR-based binder, or a mixture thereof, more preferably polyvinylidene fluoride (PVdF), acrylonitrile-butadiene rubber (NBR), or a mixture thereof, still more preferably polyvinylidene fluoride.

As the separator, an insulating thin film having high ion permeability and mechanical strength may be used. In general, the processing diameter of a separator may be 0.01 to 10 um, and the thickness thereof may be 5 to 300 um. Non-limiting examples of such a separator may include a chemical resistant and hydrophobic olefin-based polymer such as polypropylene, a sheet or non-woven fabric made of glass fiber, polyethylene, or the like, and the like.

The separator may preferably include a PVdF-based binder. In this case, battery performance may be excellent, and folding of the separator may be prevented through interaction with a pattern coating layer. Thus, a secondary battery capable of minimizing reduction in a manufacturing yield and occurrence of accidents due to low voltage defects may be provided.

The secondary battery may preferably include an electrolyte, and the electrolyte may include, for example, an organic solvent and a lithium salt.

For example, the organic solvent may be an aprotic solvent. As a specific example, the organic solvent may include one or more selected from the group consisting of N-methyl-2-pyrrolidinone, propylene carbonate, ethylene carbonate, butylene carbonate, dimethyl carbonate, diethyl carbonate, gamma-butyrolactone, 1,2-dimethoxy ethane, tetrahydroxy franc, 2-methyl tetrahydrofuran, dimethyl sulfoxide, 1,3-dioxolane, formamide, dimethylformamide, dioxolane, acetonitrile, nitromethane, methyl formate, methyl acetate, phosphoric acid triester, trimethoxy methane, dioxolane derivatives, sulfolane, methyl sulfolane, 1,3-dimethyl-2-imidazolidinone, propylene carbonate derivatives, tetrahydrofuran derivatives, ethers, methyl propionate, and ethyl propionate.

For example, the lithium salt may include one or more selected from the group consisting of LiCl, LiBr, LiI, LiClO₄, LiBF₄, LiB₁₀Cl₁₀, LiPF₆, LiCF₃SO₃, LiCF₃CO₂, LiAsF₆, LiSbF₆, LiAlCl₄, CH₃SO₃Li, CF₃SO₃Li, (CF₃SO₂)₂NLi, lithium chloroborane, lower aliphatic lithium carbonate, lithium tetraphenyl borate, and imides.

For example, the secondary battery may be manufactured by accommodating/sealing an electrode assembly formed by alternately stacking the positive and negative electrodes and the separator together with the electrolyte in an exterior material such as a battery case.

In addition, the secondary battery may include, for example, a unit cell, a battery module including the same, or a battery pack including the same.

The secondary battery may preferably be used as a power source for electric vehicles, hybrid electric vehicles, plug-in hybrid electric vehicles, and power storage systems.

### Method of manufacturing secondary battery

A method of manufacturing a secondary battery according to the present invention includes a step of forming a negative electrode active material layer on a metal foil; a step of performing pattern coating using a binder on the upper and lower portions of the negative electrode active material layer; a step of preparing a mono cell by performing notching after the pattern coating; a step of laminating a separator on the mono cell; and a step of stacking, on the separator, a positive electrode including a metal foil and a positive electrode active material layer coated on the metal foil. In this case, battery performance may be excellent, and folding of the separator may be prevented. Thus, a secondary battery capable of minimizing reduction in a manufacturing yield and occurrence of accidents due to low voltage defects may be provided.

The pattern coating may be preferably dual die coating. In this case, battery performance may be excellent, and folding of the separator may be prevented. Thus, reduction in a manufacturing yield and occurrence of accidents due to low voltage defects may be minimized.

The negative electrode active material layer may be preferably formed by a strip continuous coating method. In this case, battery performance may be excellent, and folding of the separator may be prevented. Thus, reduction in a manufacturing yield and occurrence of accidents due to low voltage defects may be minimized.

Description of the method of manufacturing a secondary battery may include the description of the negative electrode, the method of preparing a negative electrode, and the secondary battery described above.

The positive electrode active material layer may be preferably formed by coating a metal foil with a positive electrode active material composition in a slurry state according to a strip continuous coating method.

For example, the positive electrode metal foil may be an aluminum foil.

The positive electrode active material composition slurry may preferably include a positive electrode active material, a binder, a conductive material, and a solvent. When necessary, a dispersing agent and/or a thickener may be further included.

Solvents, dispersing agents, and thickeners commonly used in the art to which the present invention pertains may be used in the present invention without particular limitation.

Hereinafter, specific embodiments will be described in detail with reference to the accompanying drawings.

FIG. 2 below illustrates a method of manufacturing a lithium secondary battery according to a stacking method and shows a process diagram briefly illustrating a stack cell assembly process from electrode preparation to taping (Taping).

Referring to FIG. 2, at an electrode preparation step, both sides of a long sheet-shaped positive electrode current collector are coated with a positive electrode active material layer including a positive electrode active material, a conductive material, and a binder to prepare a positive electrode sheet, and then the positive electrode sheet is cut to a certain size to obtain a positive electrode. Although not shown in FIG. 2, after forming the positive electrode active material layer, a positive electrode sheet may be dried at a predetermined temperature (e.g., 135 °C) for several hours (e.g., 3 hours or more) before cutting, i.e., notching and then pressed to prepare a positive electrode.

In addition, both sides of a long sheet-shaped negative electrode current collector are coated with a negative electrode active material layer including a negative electrode active material, a conductive material, and a binder and then coated with a pattern coating layer including a binder to prepare a negative electrode sheet. Then, the negative electrode sheet is cut to a certain size to obtain a negative electrode. Although not shown in FIG. 2, after forming the negative electrode active material layer and/or the pattern coating layer, a negative electrode sheet may be pressed before cutting, i.e., notching to prepare a negative electrode.

Finally, a separator for a lithium secondary battery cut into a certain size is prepared.

Next, in an intermediate assembly step, the prepared separator is laminated on both sides of the prepared negative electrode to prepare a mono cell of separator/negative electrode/separator, and then a positive electrode is laminated on one side of the prepared mono cell to prepare a half-cell of separator/negative electrode/separator/positive electrode.

Next, in a stack cell manufacturing step, after stacking and attaching a plurality of prepared half-cells, a stacked cell is manufactured by finishing with the prepared mono-cells. Then, in a taping step, the prepared stack cell is fixed with tape.

FIG. 3 below includes cross-sectional views briefly illustrating the cross-sections of intermediate assemblies in which separator folding occurs.

Referring to FIG. 3, in some mono cells and half-cells, the weak adhesion between a negative electrode and a separator causes the negative electrode and the separator to lift and the end of the separator is rolled up, resulting in folding of the separator when stacking the mono cells and the half-cells to manufacture a stacked cell. Folding of the separator may cause a low voltage defect in the secondary battery, reducing the manufacturing yield and causing an accident during use. However, the negative electrode according to the present invention and the secondary battery including the same may prevent folding of a separator, thereby preventing low voltage defects.

### Separator folding test

When conventional methods, such as a method for detecting separator damage, a method for checking poor battery insulation, and a method for screening defective low-voltage cells, were used to confirm whether folding of a separator occurred in the stack cell and the secondary battery according to the present invention, it was indirectly confirmed that folding of the separator did not occur.

The above conventional methods may be used in the present invention without particular limitation when the methods are disclosed in the technical field to which the present invention pertains. As a specific example, when a constant voltage (CV) of 30 to 100 V is applied to a stack cell, when leakage current equal to or greater than a reference value or an insulation resistance value equal to or less than a reference value is detected, it may be evaluated that a separator has been folded. In this case, a device for measuring leakage current or a device for measuring an insulation resistance value is not particularly limited, and a commercially available measuring device may be used. For example, ST5540 (manufactured by Hioki Co.) may be used.

In the present disclosure, the reference value refers to a value obtained by measuring a normal stack cell in which a separator is not folded.

In conclusion, in the stack cell (Example) including the negative electrode on which the pattern coating layer according to the present invention is formed, folding of the separator does not occur, so that the resistance value is ideally infinite, and a large value of several hundred MΩ or more is obtained. In contrast, in the stack cell (Comparative Example) including the negative electrode without the pattern coating layer according to the present invention, folding of a separator occurs, and the insulation between positive and negative electrodes is destroyed, resulting in a low insulation resistance value.

In describing the negative electrode of the present invention, the method of preparing the negative electrode, the secondary battery including the negative electrode, and the method of manufacturing the secondary battery, it should be noted that other conditions, processes, or equipment not explicitly described herein may be appropriately selected within the range commonly practiced in the art without particular limitation.

The above-described components, elements or complete assemblies, and methods and elements thereof and modifications of aspects of the present invention for carrying out the present invention may be combined with each other and modified in any combination.

## Claims

1. A negative electrode, comprising a metal foil and a negative electrode active material layer coated thereon,
wherein upper and lower portions of the negative electrode are coated with a binder.

2. The negative electrode according to claim 1, wherein the binder is a PVdF-based binder.

3. The negative electrode according to claim 1, wherein the negative electrode active material layer contains an SBR-based binder.

4. The negative electrode according to claim 1, wherein the lower portion of the negative electrode has a larger binder coating area than the upper portion thereof.

5. The negative electrode according to claim 1, wherein the negative electrode active material layer contains a silicon-based active material.

6. The negative electrode according to claim 1, wherein the negative electrode active material layer comprises a carbon-based conductive material.

7. A method of preparing a negative electrode, comprising:
forming a negative electrode active material layer on a metal foil; and
performing pattern coating using a binder on upper and lower portions of the negative electrode active material layer.

8. The method according to claim 7, wherein the pattern coating is dual die coating.

9. The method according to claim 7, wherein the negative electrode active material layer is formed by a strip continuous coating method.

10. The method according to claim 7, comprising performing notching after performing pattern coating.

11. A secondary battery, comprising a negative electrode comprising a metal foil and a negative electrode active material layer coated on the metal foil; a positive electrode comprising a metal foil and a positive electrode active material layer coated on the metal foil; and a separator,
wherein upper and lower portions of the negative electrode are coated with a PVdF-based binder.

12. The secondary battery according to claim 11, wherein the separator comprises a PVdF-based binder.

13. A method of manufacturing a secondary battery, comprising:
forming a negative electrode active material layer on a metal foil;
performing pattern coating using a binder on upper and lower portions of the negative electrode active material layer;
preparing a monocell by performing notching after the pattern coating;
laminating a separator on the monocell; and
stacking on the separator a positive electrode comprising a metal foil and a positive electrode active material layer coated on the metal foil.

14. The method according to claim 13, wherein the pattern coating is dual die coating, or the negative electrode active material layer is formed by a strip continuous coating method.
